# EUROPEAN PATENT SPECIFICATION

(11) **EP 2 890 950 B1**
(45) Date of publication and mention of the grant of the patent: **30.11.2016**
(21) Application number: 13833748.0
(22) Date of filing: 18.08.2013
(51) Int. Cl.: G01B 7/15, G01B 11/14, G01M 13/00

(54) **TIP CLEARANCE PROBE FOR TURBINE APPLICATIONS**
SCHAUFELSPALT-SONDE FÜR TURBINENANWENDUNGEN
SONDE DE JEU D'EXTRÉMITÉ POUR DES APPLICATIONS DE TURBINES

(30) Priority: 30.08.2012 US 201213598705
(43) Date of publication of application: 08.07.2015
(73) Proprietor: United Technologies Corporation, Farmington, CT 06032 (US)
(72) Inventor: WARREN, Eli Cole, Wethersfield, Connecticut 06109 (US)
(74) Representative: Hull, James Edward
(86) International application number: PCT/US2013/055492
(87) International publication number: WO 2014/035701

(56) References cited:
- WO-A2-2006/062985
- WO-A2-2006/062985
- JP-A- 2000 202 678
- JP-A- 2012 140 956
- US-A- 5 119 036
- US-A- 6 131 473
- US-A1- 2012 032 689
- US-A1- 2012 032 689
- US-A1- 2012 069 355

## Description

### BACKGROUND

The present disclosure relates generally to rotor tip clearance probes, and more specifically to an improved housing arrangement for the same.

Rotating machines, such as gas turbine engines, require optimized rotor tip clearances to be maintained within the rotating machine for proper operation of the rotating machine. In order to ensure that the proper blade tip clearance is achieved, it is common to include a tip clearance probe in the rotating machine to measure the clearance between the rotor blade tip and an interior surface of the outer air seals of the rotating machine.

Various types of tip clearance probes are utilized in the art to determine the tip clearances. However, due to the unknown composition of a gas flowing through the clearance region (the gap between the probe and rotor tip), the tip clearance probes can be inaccurate. In particular, the number and amount of particles such as dust, water vapor, or products of combustion between the probe and the blade tip at any given time is variable and unknown.

A prior art clearance probe for detecting a rotor clearance, having the features of the preamble to claim 1, is disclosed in US 5,119,036. A prior art blade tip clearance measurement sensor is disclosed in US 2012/0032689. A prior art proximity sensor nozzle is disclosed in WO 2006/062985. A prior art nozzle for laser beam cutting is disclosed in JP 2000 202 678.

### SUMMARY

From one aspect, the present invention provides a clearance probe in accordance with claim 1.

From another aspect, the present invention provides a method for detecting a rotor clearance in accordance with claim 11.

From yet another aspect, the present invention provides a turbine engine in accordance with claim 15.

### DESCRIPTION OF THE FIGURES

The various features and advantages of the disclosed examples will become apparent to those skilled in the art from the detailed description. The figures that accompany the detailed description can be briefly described as follows:
Figure 1 schematically illustrates a turbine engine gas path including a tip clearance probe.
Figure 2 schematically illustrates an isometric view of a tip clearance probe.
Figure 3 schematically illustrates a cross-sectional view of the tip clearance probe of Figure 2.
Figure 4 schematically illustrates an operational side view of the tip clearance probe of Figure 2.

### DETAILED DESCRIPTION

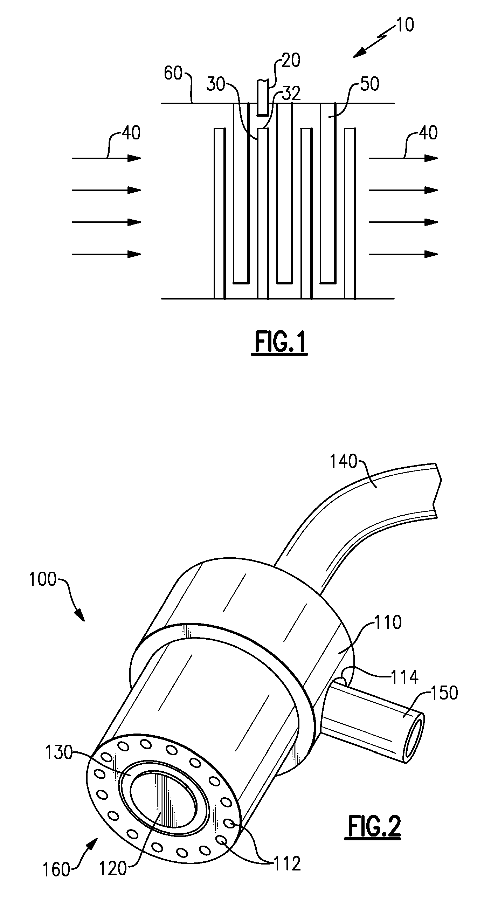

Figure 1 schematically illustrates a portion of a gas path 10 that passes through a turbine engine. Included in the gas path 10 are multiple rotors 30 and stators 50. The rotors 30 are airfoil shaped blades that are forced to rotate due to expanding gases passing through the gas path 10. Each of the rotors 30 has a rotor tip 32. In order to validate
the gas turbine engine design, the gap between the rotor blade tip 32 and the outer air seal must be accurately measured. In order to measure the tip clearance, a clearance probe 20 is included in the outer air seal 60 and measures the tip clearance (distance between the rotor tip 32 and the outer air seal 60) of a corresponding rotor 30. Figure 1 is not drawn to scale, and certain elements, such as the clearance probe 20, are exaggerated for illustrative effect.

Due to the inherent nature of turbine engines, the gas 40 passing through the gas path 10 can vary in composition and can carry an indeterminate amount of particles such as dust, water vapor, or other products of combustion. The presence of particulate in the gas 40 in the flow-path 10 can undesirably affect the readings of a tip clearance probe.

Figure 2 schematically illustrates a tip clearance probe 100 capable of providing accurate tip clearance measurements despite the presence of unknown particulates in the gas 40 passing through the gas path 10 (illustrated in Figure 1). The tip clearance probe 100 includes a housing 110 containing a sensor component 120. A ceramic insulator 130 positions the sensor component 120 within the housing 110 and holds the sensor component 120 in place. An electrical lead 140 extends out of the housing 110 and connects the tip clearance probe 100 to a signal conditioner (not pictured).

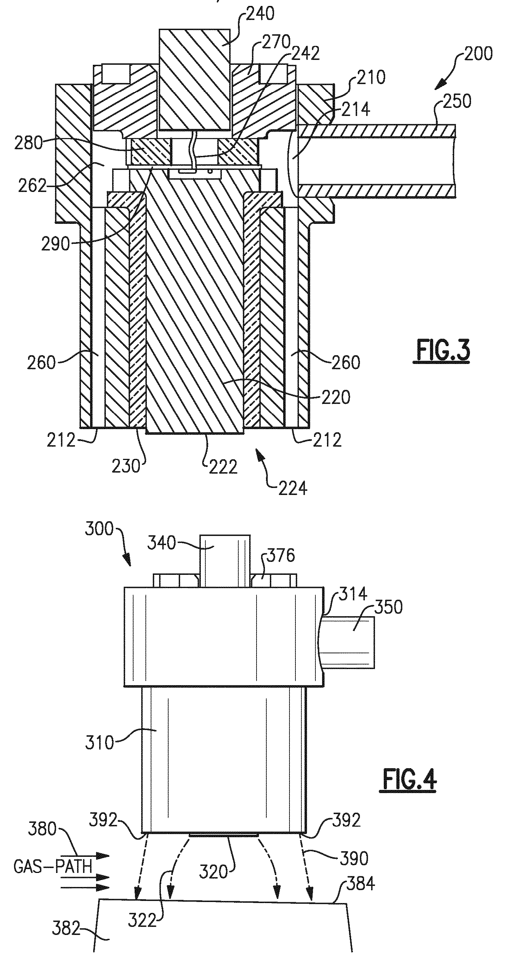

The tip clearance probe 100 also includes a sensor face 160 that is positioned facing a corresponding rotor tip when the tip clearance probe 100 is in an installed position. A gas/cooling inlet tube 150 is connected to the tip clearance probe 100 via a housing manifold inlet opening 114. The sensor face 160 also includes multiple gas exit holes 112 that expel gas inserted into the housing manifold (illustrated in Figure 3) via the gas/cooling inlet tube 150. The gas is expelled toward the corresponding rotor tip 32.

In the illustrated example of Figure 2, the gas/cooling inlet tube 150 facilitates an insertion of a cooling gas, such as nitrogen (GN2), into the housing manifold. As the cooling gas passes through the housing 110, the cooling gas cools the housing 110, ensuring that the tip clearance probe 100 stays within standard clearance probe temperature parameters and does not overheat. In alternate examples the cooling system for the tip clearance probe 100 can be a separate system and the gas/cooling inlet tube 150 can insert any gas capable of generating an air curtain effect (described below with regards to Figure 4).

Figure 3 illustrates a cross-sectional view of a tip clearance probe 200, such as the tip clearance probe 100 illustrated in Figure 2. As with the example of Figure 2, the tip clearance probe 200 includes a housing 210 containing a sensor component 220. The sensor component 220 is maintained in position within the housing via a lower ceramic insulator 230 and an upper ceramic insulator 280. An electric lead 240 extends out of the top of the tip clearance probe 200. The electric lead 240 is connected to the sensor component 220 via a sensor wire 242 and transmits sensor data to a signal conditioner (not pictured). The sensor wire 242 is maintained in contact with the sensor component 220 via a strap 290.

Each of the ceramic insulators 230, 280, the sensor component 220, the strap 290 and the electric lead 240 are held in place by a cap 270 that exerts a downward pressure on the internal components of the clearance probe 200. The cap 270 is maintained in place by any known technique such as welding or press fitting to the housing.

Inside the housing 210 is a housing manifold 262 that receives a gas from a gas/cooling inlet tube 250 via a housing manifold input opening 214. The gas is distributed from the housing manifold 262 to each of multiple gas exit holes 212 on the sensor face 224 via gas passages 260 that connect the housing manifold 262 to the gas exit holes 212. The gas exit holes 212 are located on a sensor face 224 of the tip clearance probe 200 and surround a sensor component face 222 thereby generating an air curtain effect surrounding the sensed region and displacing problematic gas-path elements.

The sensor components 120, 122 described above with regards to Figures 2 and 3 are capacitance based proximity sensors. However, alternate types of sensors such as laser blade tip clearance sensors and microwave tip clearance sensors can also be beneficially used in the described arrangement.

Figure 4 illustrates a side view of a tip clearance probe 300 in operation. During operation of the turbine engine, the capacitance based tip clearance probe 300 sensor component detects the tip clearance based on the dielectric strength of the gap between the sensor face 320 and the rotor tip 382 using an electric field 322. As described above, the gas flow 380 passing through the gap can carry with it particles that affect the dielectric strength of the gap or otherwise skew the measurements of the sensor component 320. In order to prevent the particulate from passing through the gap, and thereby skewing the dielectric strength of the gap, gas exit holes 392 expel gas toward a rotor tip 384 passing below the tip clearance probe 300. The expelled gas creates an obstruction 390 in the gas path 380 that prevents the gas and particulate from passing through the sensed region (the gap). This obstruction 390 is alternately referred to as an "air curtain". The air curtain blocks a significant portion of the particles in the gas flow from passing through the electric field 322.

The gas used to generate the obstruction 390 is initially injected into the clearance probe 300 housing manifold through a gas/cooling injection tube 350 and a housing manifold inlet opening 314. The gas fills the manifold and is forced through the gas passages (illustrated in Figure 3) with enough force to create the air curtain effect blocking particulates. Thus, the air curtain minimizes the amount of particulate passing through the gap and increases the reliability and accuracy of the tip clearance probe 300.

In some example arrangements, the gas used to create the air curtain is also used to cool the probe housing 310. In such an arrangement, the cooling gas can originate from a pressurized cooling gas storage device. In other example arrangements, the tip clearance probe 300 has an independent cooling system or is not directly cooled, and the pressurized gas can come from alternate sources such as a turbine engine compressor bleed.

The preceding description is exemplary rather than limiting in nature. Variations and modifications to the disclosed examples may become apparent to those skilled in the art that do not necessarily depart from the essence of this disclosure. Thus, the scope of legal protection given to this disclosure is only determined by the following claims.

## Claims

1. A clearance probe (100; 200; 300) comprising:
a sensor component (120; 220; 320) having a sensor face (160; 222);
a housing (110; 210; 310) arranged about the sensor component (210; 230; 320); and
a probe face including the sensor face (160; 224), wherein the sensor face (160; 224) is circumscribed by a housing face; and
**characterised by**
a plurality of gas passages (260) within the housing (110; 210; 310); and
said housing face comprising a plurality of gas passage exit holes (112; 212; 392) arranged about the sensor face (160; 224) and operable to create an air curtain (390) circumferentially surrounding the sensor face (160; 224), which prevents gas and particulates from passing through a sensed region.

2. The clearance probe of claim 1, further comprising a ceramic fitting (130; 230; 280) between the housing (110; 210; 310) and the sensor component (120; 220; 320).

3. The clearance probe of claim 1 or 2, further comprising a gas cooling system operable to cool the housing (110; 210; 310) of the clearance probe (100; 200; 300).

4. The clearance probe of claim 3, wherein said gas cooling system comprises a cooling gas inlet (150; 250; 350) connected to said plurality of gas passages (260) such that each of said gas passages (260) is operable to cool the clearance probe (100; 200; 300).

5. The clearance probe of claim 3 or 4, wherein said gas cooling system includes a cooling gas at least partially comprising GN2.

6. The clearance probe of any preceding claim, wherein said housing (110; 210; 310) further comprises a gas inlet connected to the plurality of gas passages (260) via a manifold (262).

7. The clearance probe of any preceding claim, further comprising upper ceramic (280) contacting said sensor component (120; 220; 320) and a housing cap (270).

8. The clearance probe of any preceding claim, wherein said sensor component (120; 220; 320) is a capacitive sensor component.

9. The clearance probe of any of claims 1 to 7, wherein said sensor component (120; 220; 320) is a sensor type selected from a microwave sensor component, an eddy current sensor component, or a laser blade tip clearance sensor.

10. The clearance probe of any preceding claim, wherein each of said gas passage exit holes (112; 212; 392) is arranged approximately equal distance from each adjacent gas exit hole (112; 212; 392), thereby creating an evenly distributed gas curtain (390).

11. A method for detecting a rotor clearance comprising the step of circumscribing a sensor face (160; 224) of a tip clearance probe (100; 200; 300) with a gas curtain (390) such that gas and particulates are prevented from passing through a sensed region.

12. The method of claim 11, further comprising the steps of:
passing a gas through clearance probe housing (110; 210; 310); and
ejecting said gas from a plurality of gas exit holes (112; 212; 392) on a sensor face of said tip clearance probe (100; 200; 300), thereby creating said gas curtain (390).

13. The method of claim 12, wherein said step of passing a gas through the tip clearance probe housing (110; 210; 310) comprises passing a cooling gas through said housing (110; 210; 310), thereby cooling said tip clearance probe (100; 200; 300).

14. The method of claim 13, wherein passing said cooling gas through said tip clearance probe housing (110; 210; 310) comprises passing nitrogen gas through said tip clearance probe housing (110; 210; 310).

15. A turbine engine comprising:
a gas path (10) including a plurality of rotors (30) and stators (50); and
the clearance probe (100; 200; 300) of any of claims 1-10, configured to detect a clearance between at least one of said rotors (30) and an outer diameter wall of said gas path (10).

## Patentansprüche

1. Spaltsonde (100; 200; 300), umfassend:
ein Sensorbauteil (120; 220; 320) mit einer Sensorfläche (160; 222);
ein Gehäuse (110; 210; 310), das um das Sensorbauteil (210; 230; 320) herum angeordnet ist; und
eine Sondenfläche, die die Sensorfläche (160; 224) umfasst, wobei die Sensorfläche (160; 224) durch eine Gehäusefläche begrenzt ist; und **gekennzeichnet durch**
eine Vielzahl von Gasdurchlässen (260) in dem Gehäuse (110; 210; 310); und
wobei die Gehäusefläche eine Vielzahl von Gasdurchlassausgangsöffnungen (112; 212; 392) umfasst, die um die Sensorfläche (160; 224) angeordnet und betriebsfähig sind, um einen Luftvorhang (390) zu erzeugen, der die Sensorfläche (160; 224) in Umfangsrichtung umgibt, was verhindert, dass Gas und Partikel **durch** eine gemessene Region gelangen.

2. Spaltsonde nach Anspruch 1, ferner umfassend ein Keramikformstück (130; 230; 280) zwischen dem Gehäuse (110; 210; 310) und dem Sensorbauteil (120; 220; 320).

3. Spaltsonde nach Anspruch 1 oder 2, ferner umfassend ein Gaskühlsystem, das betriebsfähig ist, um das Gehäuse (110; 210; 310) der Spaltsonde (100; 200; 300) zu kühlen.

4. Spaltsonde nach Anspruch 3, wobei das Gaskühlsystem einen Kühlgaseinlass (150; 250; 350) umfasst, der mit der Vielzahl von Gasdurchlässen (260) verbunden ist, derart, dass ein jeder der Gasdurchlässe (260) betriebsfähig ist, um die Spaltsonde (100; 200; 300) zu kühlen.

5. Spaltsonde nach Anspruch 3 oder 4, wobei das Gaskühlsystem ein Kühlgas beinhaltet, das wenigstens teilweise GN2 umfasst.

6. Spaltsonde nach einem der vorangehenden Ansprüche, wobei das Gehäuse (110; 210; 310) ferner einen Gaseinlass umfasst, der über einen Verteiler (262) mit der Vielzahl von Gasdurchlässen (260) verbunden ist.

7. Spaltsonde nach einem der vorangehenden Ansprüche, ferner umfassend eine obere Keramik (280), die in Kontakt mit dem Sensorbauteil (120; 220; 320) steht, und einen Gehäuseverschluss (270).

8. Spaltsonde nach einem der vorangehenden Ansprüche, wobei das Sensorbauteil (120; 220; 320) ein kapazitives Sensorbauteil ist.

9. Spaltsonde nach einem der Ansprüche 1 bis 7, wobei das Sensorbauteil (120; 220; 320) ein Sensortyp ist, der ausgewählt ist aus einem Mikrowellensensorbauteil, einem Wirbelstromsensorbauteil oder einem Laserschaufelspaltsensor.

10. Spaltsonde nach einem der vorangehenden Ansprüche, wobei eine jede der Gasdurchlassausgangsöffnungen (112; 212; 392) etwa im gleichen Abstand von einer jeweiligen benachbarten Gasausgangsöffnung (112; 212; 392) angeordnet ist, wodurch ein gleichmäßig verteilter Gasvorhang (390) erzeugt wird.

11. Verfahren zum Erkennen eines Rotorspalts, umfassend den Schritt des Begrenzens einer Sensorfläche (160; 224) einer Schaufelspaltsonde (100; 200; 300) mit einem Gasvorhang (390), derart, dass Gas und Partikel daran gehindert werden, durch eine gemessene Region zu gelangen.

12. Verfahren nach Anspruch 11, ferner folgende Schritte umfassend:
Leiten eines Gases durch ein Spaltsondengehäuse (110; 210; 310); und
Ausstoßen des Gases aus einer Vielzahl von Gasausgangsöffnungen (112; 212; 392) an einer Sensorfläche der Schaufelspaltsonde (100; 200; 300), wodurch der Gasvorhang (390) erzeugt wird.

13. Verfahren nach Anspruch 12, wobei der Schritt des Leitens eines Gases durch das Schaufelspaltsondengehäuse (110; 210; 310) das Leiten eines Kühlgases durch das Gehäuse (110; 210; 310) umfasst, wodurch die Schaufelspaltsonde (100; 200; 300) gekühlt wird.

14. Verfahren nach Anspruch 13, wobei das Leiten von Kühlgas durch das Schaufelspaltsondengehäuse (110; 210; 310) das Leiten von Stickstoffgas durch das Schaufelspaltsondengehäuse (110; 210; 310) umfasst.

15. Turbinenmotor, umfassend:
einen Gasweg (10) mit einer Vielzahl von Rotoren (30) und Statoren (50); und
die Spaltsonde (100; 200; 300) nach einem der Ansprüche 1-10, die dazu ausgestaltet ist, einen Spalt zwischen wenigstens einem der Rotoren (30) und einer Außendurchmesserwand des Gaswegs (10) zu erkennen.

## Revendications

1. Sonde de jeu (100 ; 200 ; 300) comprenant :
un composant capteur (120 ; 220 ; 320) ayant une face de détection (160 ; 222) ;
un boîtier (110 ; 210 ; 310) agencé autour du composant capteur (210 ; 230 ; 320) ; et
une face sonde incluant la face de détection (160 ; 224), dans laquelle la face de détection (160 ; 224) est délimitée par une face boîtier ; et
**caractérisée par**
une pluralité de passages de gaz (260) à l'intérieur du boîtier (110 ; 210 ; 310) ;
et ladite face boîtier comprenant une pluralité de trous de sortie de passage de gaz (112 ; 212 ; 392) agencés autour de la face de détection (160 ; 224) et capable de créer un rideau d'air (390) entourant de façon circonférentielle la face de détection (160 ; 224), ce qui empêche les gaz et les particules de pénétrer à travers une région captée.

2. Sonde de jeu selon la revendication 1, comprenant en outre un culot céramique (130 ; 230 ; 280) entre le boîtier (110 ; 210 ; 310) et le composant capteur (120 ; 220 ; 320).

3. Sonde de jeu selon la revendication 1 ou 2, comprenant en outre un système de refroidissement des gaz capable de refroidir le boîtier (110 ; 210 ; 310) de la sonde de jeu (100 ; 200 ; 300).

4. Sonde de jeu selon la revendication 3, dans laquelle ledit système de refroidissement des gaz comprend une entrée de gaz refroidissante (150 ; 250 ; 350) connectée à ladite pluralité de passages de gaz (260) tel que chacun desdits passages de gaz (260) est capable de refroidir la sonde de jeu (100 ; 200 ; 300).

5. Sonde de jeu selon la revendication 3 ou 4, dans laquelle ledit système de refroidissement des gaz inclut un gaz refroidissant comprenant au moins partiellement du GN2.

6. Sonde de jeu selon une quelconque revendication précédente, dans laquelle ledit boîtier (110 ; 210 ; 310) comprend en outre une entrée de gaz connectée à la pluralité des passages de gaz (260) via un collecteur (262).

7. Sonde de jeu selon une quelconque revendication précédente, comprenant en outre une céramique supérieure (280) en contact avec ledit composant capteur (120 ; 220 ; 320) et un capuchon de boîtier (270).

8. Sonde de jeu selon une quelconque revendication précédente, dans laquelle ledit composant capteur (120 ; 220 ; 320) est un composant capteur capacitif.

9. Sonde de jeu selon l'une quelconque des revendications 1 à 7, dans laquelle ledit composant capteur (120 ; 220 ; 320) est un type de capteur sélectionné à partir d'un composant capteur micro-onde, un composant capteur de courant de Foucault ou un capteur laser de jeu d'extrémité d'aubes.

10. Sonde de jeu selon une quelconque revendication précédente, dans laquelle chacun desdits trous de sortie de passage de gaz (112 ; 212 ; 392) est agencé approximativement à égale distance de chaque trou de sortie de gaz adjacent (112 ; 212 ; 392), créant ainsi un rideau de gaz réparti uniformément (390).

11. Méthode pour détecter un jeu de rotor comprenant l'étape d'entourer une face de détection (160 ; 224) d'une sonde de jeu d'extrémité (100 ; 200 ; 300) avec un rideau de gaz (390) tel que le gaz et les particules sont empêchés de passer à travers une région captée.

12. Méthode selon la revendication 11, comprenant en outre les étampes :
de passer un gaz à travers le boîtier de la sonde de jeu (110 ; 210 ; 310) ; et
d'éjecter ledit gaz à partir d'une pluralité de trous de sortie de gaz (112 ; 212 ; 392) sur une face de détection de ladite sonde de jeu d'extrémité (100 ; 200 ; 300), créant ainsi ledit rideau de gaz (390).

13. Méthode selon la revendication 12, dans laquelle ladite étape consistant à faire passer un gaz à travers le boîtier de la sonde de jeu d'extrémité (110 ; 210 ; 310) comprend le passage d'un gaz refroidissant à travers ledit boîtier (110 ; 210 ; 310), refroidissant ainsi ledit boîtier de sonde de jeu d'extrémité (100 ; 200 ; 300).

14. Méthode selon la revendication 13, dans laquelle faire passer ledit gaz refroidissant à travers ledit boîtier de la sonde de jeu d'extrémité (110 ; 210 ; 310) comprend le passage de gaz d'azote à travers ledit boîtier de la sonde de jeu d'extrémité (110 ; 210 ; 310).

15. Moteur de turbine comprenant :
un passage de gaz (10) incluant une pluralité de rotors (30) et de stators (50) ; et
la sonde de jeu (100 ; 200 ; 300) d'une quelconque des revendications 1 à 10, configurée pour détecter un jeu entre au moins un desdits rotors (30) et une paroi du diamètre extérieur dudit passage de gaz (10).
